# EUROPEAN PATENT APPLICATION

(11) **EP 4 656 558 A1**
(43) Date of publication of application: **03.12.2025**
(21) Application number: 24769855.8
(22) Date of filing: 07.03.2024
(51) Int. Cl.: B65G 1/04, B65G 1/137

(54) **CARGO PICKING AND PLACING STRUCTURE, LOGISTICS ROBOT AND WAREHOUSING SYSTEM**

(30) Priority: 16.03.2023 CN 202320585160 U
(71) Applicant: Hai Robotics Co., Ltd., Shenzhen, Guangdong 518000 (CN)
(72) Inventor: ZHAO, Ying, Shenzhen, Guangdong 518000 (CN)
(74) Representative: Gulde & Partner
(86) International application number: PCT/CN2024/080650
(87) International publication number: WO 2024/188162

(57) **Abstract**

Embodiments of the present disclosure relate to the field of logistics warehousing technologies, and provide a picking and placing structure and a logistics robot. The picking and placing structure includes a main structure, a first robotic arm, and a first sensor. The first robotic arm is disposed on the main structure and is linearly movable relative to the main structure. The first sensor is disposed on the first robotic arm. The first sensor is configured to detect an obstruction in front of the first robotic arm when the first robotic arm extends and moves. An angle α is formed between projections of a straight line where a first sensing beam emitted by a first emitting point of the first sensor lies and a straight line where a movement direction of the first robotic arm lies on a horizontal plane. The angle α is greater than 0° and less than 90°. In this way, the embodiments of the present disclosure can resolve the problem of poor obstruction detection effect of the robotic arm of the picking and placing robot.

## Description

### CROSS-REFERENCES

This application claims priority to Chinese Patent Application No. 202320585160.1, entitled "PICKING AND PLACING STRUCTURE, LOGISTICS ROBOT, AND WAREHOUSING SYSTEM", filed with the China National Intellectual Property Administration on March 16, 2023, which is incorporated herein by reference in its entirety.

### TECHNICAL FIELD

Embodiments of the present disclosure relate to the field of logistics warehousing technologies, and specifically, to a picking and placing structure, a logistics robot, and a warehousing system.

### BACKGROUND OF THE INVENTION

Currently, with the development of technologies, the productivity of people is continuously improved, and production and demands of various products are increasingly increased. Consequently, warehousing demands of products and raw materials are also continuously increased. Therefore, warehouses are built to better store the products and raw materials.

When there are a large number of objects stored in a warehouse, manual management of the objects will lead to low efficiency in taking out and placing the objects. In some fields with numerous types of raw materials and large throughput, the efficiency of logistics warehousing even directly affects the production efficiency. Therefore, robots are usually used in logistics warehousing. With the use of robots to pick or place goods in a warehouse, heavy goods can be better picked and placed, and a large number of goods can be picked and placed with less manpower. By means of a properly designed automation program, robots can even completely automatically manage the goods in the warehouse.

However, in the existing logistics warehousing technologies, a robot is likely to collide with a material box or an obstruction when performing a picking and placing operation, causing a problem. Therefore, there is an urgent need to design a proper picking and placing structure to reduce the probability that a picking and placing robot collides with an obstruction during operation.

### SUMMARY OF THE INVENTION

In view of the foregoing problem, embodiments of the present disclosure provide a picking and placing structure, a logistics robot, and a warehousing system, to resolve the problem of poor obstruction detection effect of a robotic arm of a picking and placing robot.

According to an aspect of the embodiments of the present disclosure, a picking and placing structure is provided. The picking and placing structure includes a main structure, a first robotic arm, and a first sensor. The first robotic arm is disposed on the main structure and is linearly movable relative to the main structure. The first sensor is disposed on the first robotic arm. The first sensor is configured to detect an obstruction in front of the first robotic arm when the first robotic arm extends and moves. An angle α is formed between projections of a straight line where a first sensing beam emitted by a first emitting point of the first sensor lies and a straight line where a movement direction of the first robotic arm lies on a horizontal plane. The angle α is greater than 0° and less than 90°.

In a practical application of the picking and placing structure provided in the embodiments of the present disclosure, with the formation of the angle α greater than 0° and less than 90° between the projections of the straight line where the first sensing beam emitted by the first sensor lies and the straight line where the movement direction of the first robotic arm lies on the horizontal plane, when the first sensor detects, by using the first sensing beam, that a first distance is less than a first distance threshold, indicating that a shortest distance between the first robotic arm and the obstruction is also less than a safe distance required in practical operation, the first robotic arm stops moving. As such, collision between the first robotic arm and the obstruction is avoided, thereby reducing the probability of occurrence of an accident due to collision of the robotic arm. In addition, because the angle α greater than 0° and less than 90° is formed between the projections of the straight line where the first sensing beam emitted by the first emitting point of the first sensor lies and the straight line where the movement direction of the first robotic arm lies on the horizontal plane, the first sensing beam emitted by the first sensor can further detect an area of an edge of an end surface of the robotic arm, to avoid collision between the edge of the end surface of the robotic arm and the obstruction. In addition, the embodiments of the present disclosure have lower sensing requirements for the first sensor, and the technical effect of the embodiments of the present disclosure can be substantially achieved by using a sensor that can emit a single sensing beam, without requiring the use of a plurality of beams or a plurality of sensors. This reduces application costs and is beneficial to the deployment of a large number of picking and placing structures provided in the embodiments of the present disclosure in technical fields such as logistics warehousing.

In an optional embodiment, the first robotic arm is configured to pick or place a material box; the first sensor is configured to emit the first sensing beam through the first emitting point when the first robotic arm picks or places the material box, to detect a first distance between the first emitting point and the obstruction; and the first robotic arm is configured to stop moving when the first sensor detects that the first distance is less than or equal to a first distance threshold. The first robotic arm stops moving when the first sensor detects that the first distance is less than or equal to the first distance threshold, so that the picking and placing structure provided in the embodiments of the present disclosure can stop moving the first robotic arm in a timely manner when the first sensor detects the obstruction and detects that the obstruction is about to collide with the first robotic arm, to avoid collision between the first robotic arm and the obstruction, thereby reducing the probability of occurrence of a collision accident.

In an optional embodiment, the first sensor is obliquely disposed on the first robotic arm, to form the angle α, and/or, the angle α is greater than 5°, and/or, the angle α is less than 33°, and/or, the straight line where the first sensing beam lies is parallel to the horizontal plane, and/or, the first sensor is disposed at an end portion of an extended end of the first robotic arm, and/or, the first sensor is disposed at a central position on an end surface of the extended end of the first robotic arm, and/or, the first sensor is a laser ranging sensor. In a practical application, a beam emitted by the sensor is usually parallel to at least one end surface of a main body of the sensor. If it is intended to cause the sensor to emit an oblique sensing ray, the sensor may need to be customized, leading to increased costs. By obliquely disposing the first sensor on the first robotic arm, the first sensing beam can be conveniently made oblique. The angle α being greater than 5° and/or the angle α being less than 33° are parameters commonly used in the field of logistics warehousing. Setting the angle α to be within this range ensures that most obstructions that may appear in practical operation can be detected, and facilitates the assembly by technical personnel. When the straight line where the first sensing beam lies is parallel to the horizontal plane, an oblique angle of the first sensing beam is exactly a complementary angle of the angle α, which enables technical personnel to accurately set the angle α more conveniently, and makes it less likely to cause a deviation in the angle. Disposing the first sensor at the end portion of the extended end of the first robotic arm ensures that when the first robotic arm moves, the first sensor can first detect the obstruction, thereby avoiding an accident that the first robotic arm has already collided with the obstruction when the first sensor detects the obstruction. Disposing the first sensor at the central position on the end portion of the extended end of the first robotic arm can make the sensing area of the first sensor more balanced, thereby reducing a sensing blind zone at the end surface of the extended end. Using the laser ranging sensor ensures that a sensing and obstacle avoidance function can be achieved in the embodiments of the present disclosure, and can also improve the precision of the first sensor in sensing the obstruction.

In an optional embodiment, the picking and placing structure further includes a second sensor, the second sensor is disposed on the first robotic arm, an angle β is formed between a projection of a straight line where a second sensing beam emitted by a second emitting point of the second sensor lies on the horizontal plane and the projection of the straight line where the movement direction of the first robotic arm lies on the horizontal plane, the angle β is greater than 0° and less than 90°, the first sensor is configured to detect an obstruction close to one side of the first robotic arm, and the second sensor is configured to detect an obstruction close to another side of the first robotic arm. With the arrangement of the second sensor that emits the second sensing beam, the first robotic arm can not only respond to an obstruction in one direction, but also respond to an obstruction in another direction, thereby further reducing the probability of collision of the first robotic arm. In addition, the picking and placing structure provided in the embodiments of the present disclosure can simultaneously detect material boxes on two sides of the first robotic arm when picking and placing goods from and into a plurality of material boxes placed side by side, thereby avoiding the problem that the picking and placing structure that only can detect an obstruction on one side collides with an obstruction on the other side.

In an optional embodiment, the first sensor and/or the second sensor is a laser ranging sensor, and a spot diameter of the first sensing beam and/or the second sensing beam is 0.5 mm to 5 mm. Using the laser ranging sensor and setting the spot diameter of the first sensing beam and/or the second sensing beam to 0.5 mm to 5 mm can make sensing of the first sensor and/or the second sensor more accurate, and prevent the sensing beam from excessively diffusing to affect accuracy of the first sensor and/or the second sensor.

In an optional embodiment, the first sensor includes an angle control device, and the angle control device is configured to adjust an orientation of the first emitting point, to adjust a value of the angle α in a range of 0° to 90°. With the arrangement of the angle control device, the angle α between the first sensing beam emitted by the first sensor and the plane where the end surface of the first robotic arm lies in the picking and placing structure provided in the embodiments of the present disclosure can be adjusted and controlled in real time and does not need to be set to a fixed angle in advance during assembly the production process. Therefore, technical personal can adjust the angle α at any time according to an actual requirement in practical applications, thereby reducing operation difficulty and improving applicability and ease of use.

In an optional embodiment, the picking and placing structure includes at least two first robotic arms, where at least two of the at least two first robotic arms are symmetrically disposed. In some cases, in the field of logistics warehousing, a material box may be heavy, and a single robotic arm may fail to bear the weight of the material box. By disposing at least two first robotic arms on the main structure and symmetrically disposing at least two of the at least two first robot arms, the picking and placing structure provided in the embodiments of the present disclosure can use a plurality of robotic arms to pick or place goods more stably, and can bear heavier goods, thereby solving the problem that the robotic arm is insufficient to bear heavy goods.

According to another aspect of the embodiments of the present disclosure, a logistics robot is provided, including the picking and placing structure according to any one of the foregoing embodiments. When the picking and placing structure provided in the embodiments of the present disclosure is applied to the logistics robot, technical personnel only needs to calculate the first distance threshold according to the angle α and a preset safe distance, and configure the first sensor in the picking and placing structure to send an adjustment signal to the first robotic arm when detecting that a length of the first sensing beam emitted obliquely is less than the first distance threshold, so that the first robotic arm stops moving upon receiving the adjustment signal. As such, the first robotic arm is prevented from colliding with the obstruction, thereby reducing the probability of a fault caused by collision of the robotic arm when the logistics robot is picking and placing goods in a logistics warehouse.

In an optional embodiment, the logistics robot further includes a mobile chassis. The mobile chassis is connected to the picking and placing structure. The mobile chassis is configured to support and drive the picking and placing structure to move. At least one third sensor is disposed on the mobile chassis. The at least one third sensor is connected to the mobile chassis. The at least one third sensor is configured to emit a third sensing beam. An angle γ is formed between a straight line where the third sensing beam lies and a straight line where a movement direction of the mobile chassis lies, and the angle γ is greater than 0° and less than 90°. With the arrangement of the at least one third sensor on the mobile chassis of the logistics robot and the formation of the angle γ greater than 0° and less than 90° between the straight line where the third sensing beam emitted by the third sensor lies and the straight line where the movement direction of the mobile chassis lies, the mobile chassis, when driving the logistics robot to move, can detect an obstruction on the movement path, thereby avoiding the problem that an obstruction cannot be detected when the logistics robot is driven by the mobile chassis to move and the logistics robot collies with the obstruction.

According to the picking and placing structure provided in the embodiments of the present disclosure, the formation of the angle α greater than 0° and less than 90° between the first sensing beam emitted by the first sensor and the plane where the end surface of the first robotic arm lies expands the sensing range of the first sensor, and the first sensing beam emitted obliquely can better detect a region where an obstruction is likely to appear and collide with the robotic arm in the field of logistics warehousing. In addition, operation personnel can flexibly set an obstacle avoidance condition for the first robotic arm according to an actual requirement, thereby improving the obstruction detection probability and the applicability of the picking and placing structure.

The foregoing description is merely a brief description of the technical solutions of the present disclosure. To understand the technical means of the present disclosure more clearly, the present disclosure may be implemented according to content of the specification. In addition, to make the foregoing and other objectives, features, and advantages of the present disclosure more comprehensible, specific embodiments of the present disclosure are described below.

### BRIEF DESCRIPTION OF DRAWINGS

Various other advantages and benefits become clear to a person of ordinary skill in the art by reading the following detailed description of exemplary embodiments. The accompanying drawings are merely used for illustrating the preferred embodiments and are not intended to constitute a limitation on the present disclosure. Throughout the accompanying drawings, the same reference numerals are used to represent the same components. In the accompanying drawings:
FIG. 1 illustrates a schematic structural top view of a picking and placing structure according to an embodiment of the present disclosure;
FIG. 2 illustrates a schematic structural view of a picking and placing structure in a working scenario according to an embodiment of the present disclosure;
FIG. 3 illustrates a schematic structural view of a picking and placing structure in a working scenario according to an embodiment of the present disclosure;
FIG. 4 illustrates a schematic structural view of a picking and placing structure in a working scenario according to an embodiment of the present disclosure;

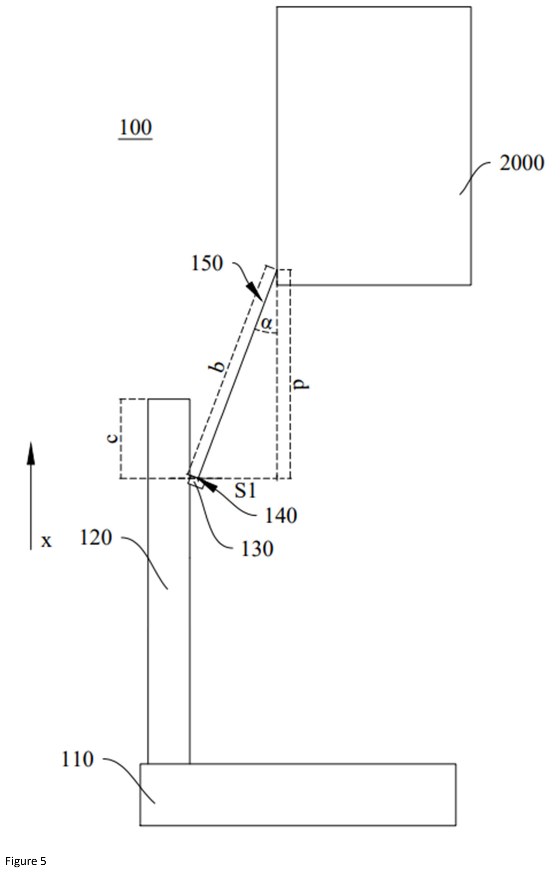

FIG. 5 illustrates a schematic structural side view of a picking and placing structure according to another embodiment of the present disclosure;
FIG. 6 illustrates a schematic structural side view of a picking and placing structure according to yet another embodiment of the present disclosure;
FIG. 7 illustrates a schematic structural view of a picking and placing structure in a working scenario according to another embodiment of the present disclosure;
FIG. 8 is an enlarged view of a part A in FIG. 7;
FIG. 9 illustrates a schematic structural view of a picking and placing structure when a first sensor is in an operating state according to an embodiment of the present disclosure;
FIG. 10 is an enlarged view of a part B in FIG. 9;
FIG. 11 illustrates a schematic structural side view of a picking and placing structure according to yet another embodiment of the present disclosure;
FIG. 12 illustrates a schematic three-dimensional structural view of a logistics robot according to an embodiment of the present disclosure; and
FIG. 13 is an enlarged view of a part C in FIG. 12.

Reference numbers in the specific embodiments are as follows:
1000: logistics robot;
100: picking and placing structure; 110: main structure; 120: first robotic arm; 130: first sensor; 140: first emitting point; 150: first sensing beam; 160: second sensor; 170: second emitting point; 180: second sensing beam; 190: extended end;
131: angle control device; 132: rotation device;
200: mobile chassis; 210: third sensor; 220: third sensing beam;
2000: obstruction.

### DETAILED DESCRIPTION

The following describes in detail the embodiments of the technical solutions of the present disclosure with reference to the accompanying drawings. The following embodiments are merely used to describe the technical solutions of the present disclosure more clearly, and therefore are provided by way of example only, and are not intended to limit the protection scope of the present disclosure.

Unless otherwise defined, meanings of all technical and scientific terms used in this specification are the same as those usually understood by a person skilled in the art to which the present disclosure pertains. The terms used herein are merely for the purpose of describing the specific embodiments, but are not intended to limit the present disclosure. The terms "include", "have", and any variant thereof in the specification and the claims of the present disclosure as well as the brief description of drawings are intended to cover a non-exclusive inclusion.

In the description of the embodiments of the present disclosure, the technical terms "first", "second", and the like are merely used to distinguish different objects, and are not to be understood as indicating or implying relative importance, or implicitly indicating the number of indicated technical features, a specific order, or a subordinate relationship. In the description of the embodiments of the present disclosure, "a plurality of" means two or more, unless otherwise definitely and specifically limited.

The term "embodiment" mentioned in the specification means that particular features, structures, or characteristics described with reference to the embodiment may be included in at least one embodiment of the present disclosure. The occurrence of the phrase at various positions in the specification does not necessarily refer to a same embodiment, nor is an independent or alternative embodiment mutually exclusive to other embodiments. A person skilled in the art explicitly or implicitly understands that the embodiments described in the specification may be combined with other embodiments.

In the description of the embodiments of the present disclosure, the term "and/or" is only an association relationship that describes associated objects, and indicates that three relationships may exist. For example, A and/or B may indicate: A exists, both A and B exist, and B exists. In addition, the character "/" in this specification generally indicates an "or" relationship between the associated objects.

In the description of the embodiments of the present disclosure, the term "a plurality of" refers to two or more (including two). Similarly, "a plurality of groups" refers to two or more (including two) groups, and "a plurality of pieces" refers to two or more (including two) pieces.

In the description of the embodiments of the present disclosure, orientation or position relationships indicated by the technical terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of illustration and description of the embodiments of the present disclosure, rather than indicating or implying that the mentioned device or element must have a particular orientation or must be constructed and operated in a particular orientation. Therefore, such terms should not be construed as limiting of the embodiments of the present disclosure.

In the description of the embodiments of the present disclosure, unless otherwise explicitly specified or defined, the terms such as "install", "connect", "connection", and "fix" should be understood in a broad sense. For example, they can refer to a fixed connection, a detachable connection, or an integral connection; or they can refer to a mechanical connection or an electrical connection; or they can refer to a direct connection, an indirect connection through an intermediate medium, internal communication between two components, or an interaction relationship between two components. A person of ordinary skill in the art may understand the specific meanings of the foregoing terms in the embodiments of the present disclosure according to specific situations.

It is found that an accident that easily occurs when a conventional picking and placing robot performs a picking and placing operation is that a robotic arm used for picking and placing goods accidentally tips over the goods, or the robotic arm is extended or retracted before being aligned with an appropriate picking and placing position, consequently causing a fault.

For the foregoing problem, it is considered that a sensor may be disposed on a robotic arm that is used by the robot for picking and placing goods, and when a distance between the robotic arm and a good or a rack is excessively short, a signal is sent to cause the robotic arm to stop moving or turning, to prevent the robotic arm from colliding with the good or rack.

However, it is found in practice that if a single-beam sensor emitting a single beam is used to sense the distance, because sensing precision of the sensor also imposes a certain requirement on the diffusion range of the beam, it is difficult to make the sensing range of the sensor exactly cover the width of the robotic arm while ensuring the sensing precision of the sensor. If the beam of the sensor is emitted in a movement direction of the robotic arm, an obstruction close to an edge of an end surface in the movement direction of the robotic arm usually cannot be detected. In this case, if the robotic arm continues to move, the robotic arm will collide with the obstruction. If a sensor with a larger sensing range and sensing precision that meets the requirement is used, purchase and maintenance costs of the picking and placing structure will be increased, which is not conducive to the deployment of the picking and placing structure on the robot.

In order to solve the foregoing problem, a picking and placing structure is designed through research. By obliquely disposing the sensor on the robotic arm and forming an angle αgreater than 0° and less than 90° between the projections of the straight line where the sensing beam emitted by the sensor lies and the straight line where the movement direction of the first robotic arm lies on the horizontal plane, the sensor is enabled to sense an obstruction in a larger range near the robotic arm, thus reducing the probability of a fault caused by collision between the robotic arm and the obstruction.

The picking and placing structure disclosed in the embodiments of the present disclosure may be used in, for example, but not limited to, a picking and placing robot in a warehousing system, and may also be applied to any other device or apparatus that needs to perform object picking, placing, and sensing. In the embodiments of the present disclosure, the use of the picking and placing structure in a picking and placing robot is used as an example for description.

In the accompanying drawings of the embodiments of the present disclosure, a direction in which the robotic arm moves towards a material box placement region is indicated by the direction of an arrow x, i.e., a direction from the picking and placing structure 100 to the material box placement region.

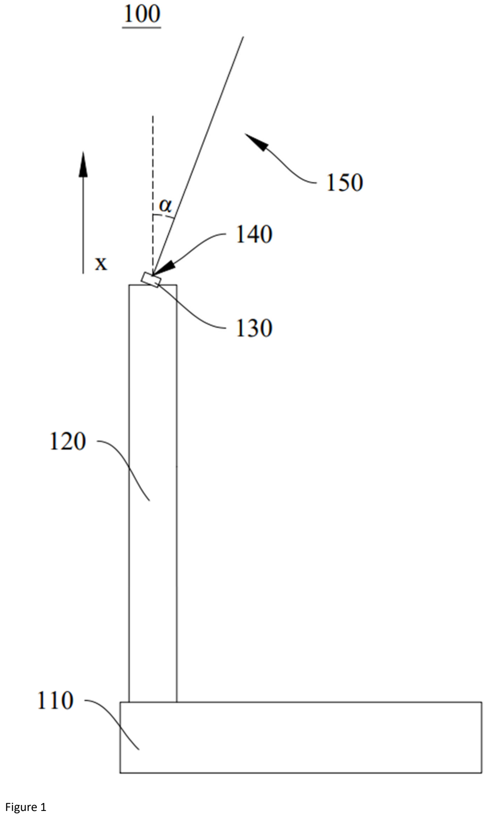

According to one aspect of the embodiments of the present disclosure, a picking and placing structure is provided. Specifically, referring to FIG. 1, FIG. 1 illustrates a schematic structural top view of a picking and placing structure 100 according to an embodiment of the present disclosure. The picking and placing structure 100 includes a main structure 110, a first robotic arm 120, and a first sensor 130. The first robotic arm 120 is disposed on the main structure 110 and is linearly movable relative to the main structure 110. The first sensor 130 is disposed on the first robotic arm 120. The first sensor 130 is configured to detect an obstruction 2000 in front of the first robotic arm 120 when the first robotic arm 120 extends and moves. An angle α is formed between projections of a straight line where a first sensing beam 150 emitted by a first emitting point 140 of the first sensor 130 lies and a straight line where a movement direction of the first robotic arm 120 lies on a horizontal plane. The angle α is greater than 0° and less than 90°.

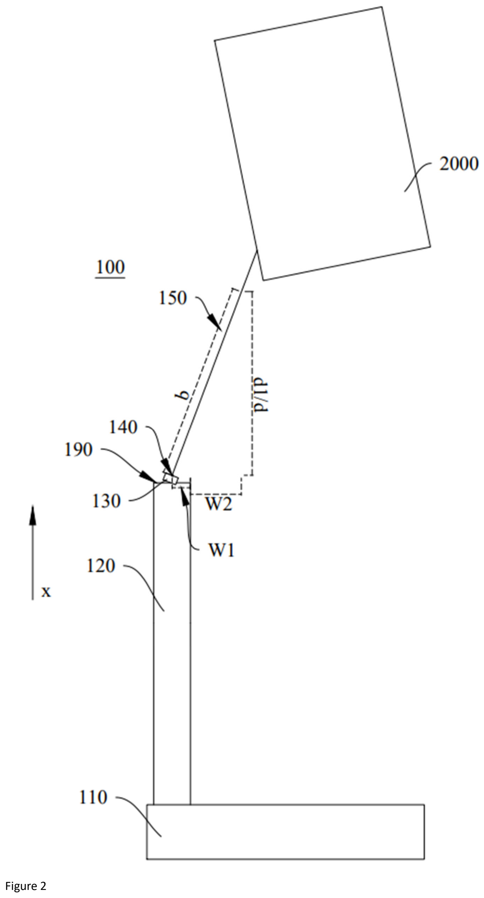

Referring to FIG. 2, FIG. 2 illustrates a schematic structural view of the picking and placing structure 100 in a working scenario according to an embodiment of the present disclosure. The horizontal plane refers to a plane that passes through the straight line where the movement direction of the first robotic arm 120 lies and at least partially passes through the obstruction 2000. In some cases, the straight line where the first sensing beam 150 lies passes through the horizontal plane, and an angle formed between a projection of the first sensing beam 150 on the horizontal plane and the projection of the straight line where the movement direction of the first robotic arm 120 lies on the horizontal plane still satisfies the limitation that the angle α is greater than 0° and less than 90°. In such cases, the solution of the present disclosure is still applicable.

It should be noted that, in the embodiments of the present disclosure, the first sensor 130 being configured to detect an obstruction 2000 in front of the first robotic arm 120 when the first robotic arm 120 extends and moves refers to detecting the obstruction 2000 that may be encountered in an extension direction of the first robotic arm 120.

It may be understood that, the specific form of the obstruction 2000 may be any object that may collide with the first robotic arm 120. In a practical application, the obstruction 2000 may be a material box, a rack, or the like.

In a practical application of the picking and placing structure 100 provided in the embodiments of the present disclosure, with the formation of the angle α greater than 0° and less than 90° between the projections of the straight line where the first sensing beam 150 emitted by the first sensor 130 lies and the straight line where the movement direction of the first robotic arm 120 lies on the horizontal plane, when the first sensor 130 detects, by using the first sensing beam 150, that a first distance is less than a first distance threshold, indicating that a shortest distance between the first robotic arm 120 and the obstruction 2000 is also less than a safe distance required in practical operation, the first robotic arm 120 stops moving. As such, collision between the first robotic arm 120 and the obstruction 2000 is avoided, thereby reducing the probability of occurrence of an accident due to collision of the robotic arm. In addition, because the angle α greater than 0° and less than 90° is formed between the projections of the straight line where the first sensing beam 150 emitted by the first emitting point 140 of the first sensor 130 lies and the straight line where the movement direction of the first robotic arm 120 lies on the horizontal plane, the first sensing beam 150 emitted by the first sensor 130 can further detect an area of an edge of an end surface of the robotic arm, to avoid collision between the edge of the end surface of the robotic arm and the obstruction. In addition, the embodiments of the present disclosure have lower sensing requirements for the first sensor 130, and the technical effect of the embodiments of the present disclosure can be substantially achieved by using a sensor that can emit a single sensing beam, without requiring the use of a plurality of beams or a plurality of sensors. This reduces application costs and is beneficial to the deployment of a large number of picking and placing structures 100 provided in the embodiments of the present disclosure in technical fields such as logistics warehousing.

According to some embodiments of the present disclosure, optionally, the first robotic arm 120 is configured to pick or place a material box; the first sensor 130 is configured to emit the first sensing beam 150 through the first emitting point 140 when the first robotic arm 120 picks or places the material box, to detect a first distance between the first emitting point 140 and the obstruction 2000; and the first robotic arm 120 is configured to stop moving when the first sensor 130 detects that the first distance is less than or equal to a first distance threshold.

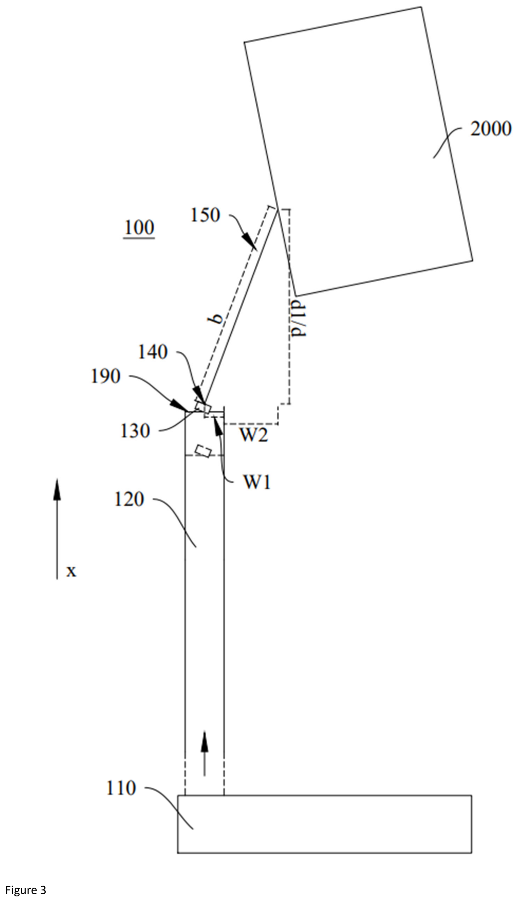

Still referring to FIG. 2, and further referring to FIG. 3, FIG. 3 illustrates a schematic structural view of the picking and placing structure 100 in a working scenario according to an embodiment of the present disclosure. When the first robotic arm 120 moves along a direction x until relative positions of the first robotic arm 120 and the obstruction 2000 change from those shown in FIG. 2 to those shown in FIG. 3, and an optical path length of the first sensing beam 150 emitted by the first sensor 130 from the first emitting point 140 to a landing point is less than or equal to the first distance threshold, the first robotic arm 120 stops moving, to prevent the edge of the end surface of the first robotic arm 120 from colliding with the obstruction 2000.

Still referring to FIG. 3, when there is an obstruction 2000 in a sensing range of the first sensing beam 150, it may be understood that the obstruction 2000 blocks propagation of the first sensing beam 150. Consequently, the first sensing beam 150 is incident on and reflected by the obstruction 2000, and light reflected back is received by the first sensor 130. An internal circuit of the first sensor 130 may obtain an accurate distance of the first sensing beam 150 from the first emitting point 140 to the landing point, i.e., the first distance, by any method of measuring the distance based on the speed of light.

The first distance threshold b is a value preset by technical personnel. When detecting, by using the first sensing beam 150, that the first distance between the obstruction 2000 and the first sensor 130 is less than or equal to the first distance threshold b, the first sensor 130 sends a corresponding adjustment signal to control a motion status of the first robotic arm 120, to cause the first robotic arm 120 to stop moving. The adjustment signal is a control signal in running communication of a circuit or an apparatus, for example, 0 or 1, and may also be an instruction set, a data set, and the like. The adjustment signal may directly control the apparatus to perform an operation, or may be a data source to be subjected to judgment processing by some processes to output a control signal. It may be understood that, sending the adjustment signal to the first robotic arm 120 is for the purpose of directly or indirectly making the first robotic arm 120 to respond, to prevent the first robotic arm 120 from colliding with the obstruction 2000.

A specific implementation in which the first robotic arm 120 stops extending when the first sensor 130 detects that the first distance is less than or equal to the first distance threshold b may be implemented using an existing controller having a comparison circuit, or using an existing software algorithm. When detecting that the first distance is less than the first distance threshold b, the first sensor 130 sends an adjustment signal to the first robotic arm 120, to cause the first robotic arm 120 to change the motion status. The embodiments of the present disclosure do not relate to improvement to the software algorithm.

The first robotic arm 120 stops moving when the first sensor 130 detects that the first distance is less than or equal to the first distance threshold b, so that the picking and placing structure 100 provided in the embodiments of the present disclosure can stop moving the first robotic arm 120 in a timely manner when the first sensor 130 detects the obstruction 2000 and detects that the obstruction 2000 is about to collide with the first robotic arm 120, to avoid collision between the first robotic arm 120 and the obstruction 2000, thereby reducing the probability of occurrence of a collision accident.

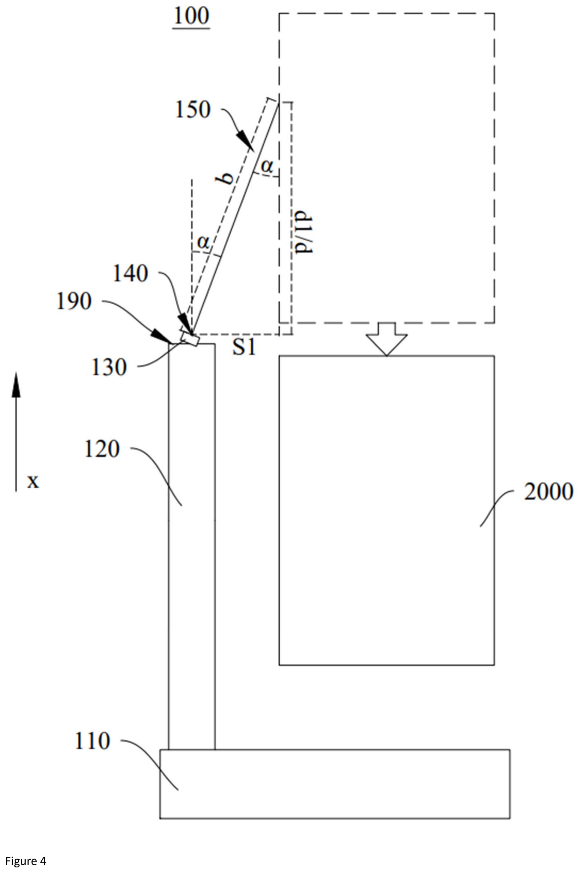

Further, to reduce the risk of an accident caused by a signal transmission delay, the present disclosure provides an implementation. Referring to FIG. 4, FIG. 4 illustrates a schematic structural view of the picking and placing structure in a working scenario according to an embodiment of the present disclosure. A time elapsed from the sending of the adjustment signal by the first sensor 130 to completion of the change of the motion status of the first robotic arm 120 is defined as a first time, a distance by which the first robotic arm 120 moves toward a material box placement region during the first time is defined as a buffer distance d, the first sensor 130 is disposed at an end portion of the first robotic arm 120, and a product of the optical path length from the landing point of the first sensing beam 150 to the first emitting point 140 and sinα is greater than or equal to the buffer distance d.

The buffer distance d is set to ensure that after the first sensor 130 detects the obstruction 2000, the first robotic arm 120 can avoid the obstacle in a timely manner despite of reasons such as a signal transmission delay or motion inertia before receiving the adjustment signal sent by the first sensor 130 and changing the motion status.

In a practical application, the buffer distance d may be a test value, i.e., technical personnel performs a test to obtain the first time elapsed from the sending of the adjustment signal by the first sensor 130 to completion of the change of the motion status of the first robotic arm 120, and calculate a distance by which the first robotic arm 120 can move within the first time, thus obtaining the buffer distance d.

Still referring to FIG. 4, after technical personnel determines the buffer distance d and the safe distance S1, the first distance threshold b or the angle α may be set flexibly as required, to ensure that the shortest distance between the first emitting point 140 and the obstruction 2000 is greater than or equal to the safe distance S1, and a vertical distance between the landing point of the first sensing beam 150 and the plane where the end surface of the first robotic arm 120 lies is greater than or equal to the buffer distance d. A line segment having a length of the first distance threshold b can form a right-angled triangle together with the buffer distance d and the safe distance S1 that have been determined, with the first distance threshold b being a hypotenuse, and the buffer distance d and the safe distance S1 being right-angle sides. In this case, the product of the optical path length from the landing point of the first sensing beam 150 to the first emitting point 140 and sinα is the vertical distance between the landing point of the first sensing beam 150 and the plane where the end surface of the first robotic arm 120 lies. When the vertical distance is greater than or equal to the buffer distance d, it can be ensured that there is a sufficient distance for buffering when the first robotic arm is about to collide with the obstruction 2000.

The setting of the buffer distance d prevents the first robotic arm 120 from colliding with the obstruction 2000 due to an untimely response caused by a factor such as a signal transmission delay, and further avoids a collision accident that may occur during a picking and placing operation of the picking and placing structure 100 provided in the embodiments of the present disclosure. In this way, the operation can be performed more stably, and the probability of collision is reduced.

It should be noted that, when the first sensor 130 is disposed on a side wall of the first robotic arm 120, operation personnel does not need to consider the length of the end surface of the first robotic arm 120 when presetting the safe distance S1, i.e., in this case, the safe distance S1 may directly represent the shortest distance between the first robotic arm 120 and the obstruction 2000 when the first robotic arm 120 moves toward the material box placement region.

According to some embodiments of the present disclosure, optionally, the first sensor 130 is obliquely disposed on the first robotic arm 120, to form the angle α.

In a practical application, a beam emitted by the sensor is usually parallel to at least one end surface of a main body of the sensor. If it is intended to cause the sensor to emit an oblique sensing ray, the sensor may need to be customized, leading to increased costs. By obliquely disposing the first sensor 130 on the first robotic arm 120, the first sensing beam 150 can be conveniently made oblique, and a tedious process of customizing accessories such as sensors is avoided.

According to some embodiments of the present disclosure, optionally, the angle α is greater than 5°, and/or, the angle α is less than 33°.

In a practical application of technical personnel, referring to FIG. 2 and FIG. 3, usually, the shortest distance W1 between the first sensor 130 and the edge of the end surface of the first robotic arm 120 is measured first, then a minimum distance W2 by which the first robotic arm 120 needs to be kept from the obstruction 2000 is preset according to an actual requirement, and then the buffer distance d by which the first robotic arm 120 continues to move due to reasons such as the signal transmission delay or inertia before stopping moving is obtained through an actual test or calculation. For the manner of obtaining the buffer distance d through testing, refer to the foregoing embodiments. In this case, referring to FIG. 4, a sum of W1 and W2 is determined as the safe distance S1. As such, the angle α may be determined according to the safe distance S1 and the buffer distance d. W2 may be a picking and placing margin between the robotic arm and the obstruction 2000 or the material box. When the first sensor 130 is disposed at the center of the end surface of the first robotic arm 120, W1 is half the width of the end surface of the first robotic arm 120. For details, refer to the following embodiments.

For example, if the first sensor 130 is installed at a middle portion on the end surface of the first robotic arm 120, W1 included in the safe distance S1 is half the length of the end surface of the first robotic arm 120.

In the field of warehouse logistics, based on commonly used specifications of existing robotic arms and safety requirements in the operation process, the safe distance S1 is a sum of the shortest distance W1 between the first sensor 130 and the edge of the end surface of the first robotic arm 120 and the minimum distance W2 between the first robotic arm 120 and the obstruction 2000. In addition, the safe distance S1 is usually not less than 2 cm; otherwise, the robotic arm will be excessively close to the material box during operation, making it difficult to avoid collision. The safe distance S1 is usually not greater than 10 cm; otherwise, performance of the robotic arm and detection precision of the sensor may fail to satisfy requirements of the goods picking and placing operation. Therefore, in the field of warehouse logistics, a value range of the safe distance S1 is usually set to 2 cm to 10 cm by technical personnel. However, with reference to a moving speed of a robotic arm and CPU performance of a robot that are commonly used in the field of warehouse logistics, the buffer distance d of the robotic arm obtained through testing by technical personnel is usually 16 cm to 20 cm. Based on the safe distance S1 and the buffer distance d, a value of the angle α may be calculated by using a cotangent function and a look-up table, i.e., cotα=d/S1. According to the value range commonly used in the field of warehouse logistics, a maximum buffer distance d of 20 cm and a minimum safe distance S1 of 2 cm may be substituted into cotα=d/S1, to obtain a maximum value of cotα which is 10. It may be learned from the look-up table that a value corresponding to the angle α of 5°, it is closest to the obtained value. A minimum buffer distance of 16 cm and a maximum safe distance S1 of 10 cm may be substituted into cot α = d/S1, to obtain a minimum value of cotα which is 1.6. It may be learned from the look-up table that a value corresponding to the angle α of 33° is closest to the obtained value. The value of cotα decreases as the angle α increases. Therefore, to enable the picking and placing structure provided in the embodiments of the present disclosure to satisfy a maximum or minimum range requirement of the parameter common used in the field of warehouse logistics during operation, the angle α needs to be greater than 5° and/or less than 33°.

Based on the above, when the angle α is set to be greater than 5° and/or the angle α is set to be less than 33°, the detection range of the first sensor 130 can well adapt to most scenarios in which a robotic arm is used to pick or place goods in the field of warehouse logistics. Technical personnel may set an accurate angle α based on parameters such as a self-defined safe distance S1 and an actually measured buffer distance d, or may directly set the angle α to be greater than 5° and/or set the angle α to be less than 33°, to save the time required for calculating the parameters by technical personnel.

According to some embodiments of the present disclosure, optionally, the straight line where the first sensing beam 150 lies is parallel to the horizontal plane.

The straight line where the first sensing beam 150 lies is parallel to the horizontal plane, i.e., the projection of the first sensing beam 150 on the horizontal plane is parallel to the straight line where the first sensing beam 150 lies. An oblique angle of the first sensing beam 150 on the first robotic arm 120 relative to an axis of the first robotic arm 120 is equal to the angle αformed between the projection of the straight line where the first sensing beam 150 lies on the horizontal plane and the projection of the straight line where the movement direction of the first robotic arm 120 lies on the horizontal plane.

When the straight line where the first sensing beam 150 lies is parallel to the horizontal plane, an oblique angle of the first sensing beam 150 is exactly a complementary angle of the angle α, which enables technical personnel to accurately set the angle α more conveniently, and makes it less likely to cause a deviation in the angle.

According to some embodiments of the present disclosure, optionally, the first sensor 130 is disposed at an end portion of an extension end 190 of the first robotic arm 120.

As shown in FIG. 4, the extension end 190 refers to an end of the first robotic arm 120 that faces the movement direction of the first robotic arm 120.

Disposing the first sensor 130 at the end portion of the extended end 190 of the first robotic arm 120 ensures that when the first robotic arm 120 moves, the first sensor 130 can first detect the obstruction 2000, thereby avoiding an accident that the first robotic arm 120 has already collided with the obstruction 2000 when the first sensor 130 detects the obstruction 2000.

According to some embodiments of the present disclosure, optionally, the first sensor 130 is disposed at a central position on an end surface of the extension end 190 of the first robotic arm 120.

The central position on the end portion of the extension end 190 refers to a geometric center of the end surface of the extension end, or may be a center of gravity. According to an actual situation, technical personnel may select different geometric points on the end surface of the extension end 190 as the central position, and install the first sensor 130 at the central position.

Disposing the first sensor 130 at the central position on the end portion of the extension end 190 of the first robotic arm 120 can make the sensing area of the first sensor 130 more uniform, thereby reducing a sensing blind zone at the end surface of the extension end 190.

According to some embodiments of the present disclosure, optionally, the first sensor 130 is a laser ranging sensor.

Using the laser ranging sensor ensures that a sensing and obstacle avoidance function can be achieved in the embodiments of the present disclosure, and can also improve the precision of the first sensor 130 in sensing the obstruction 2000.

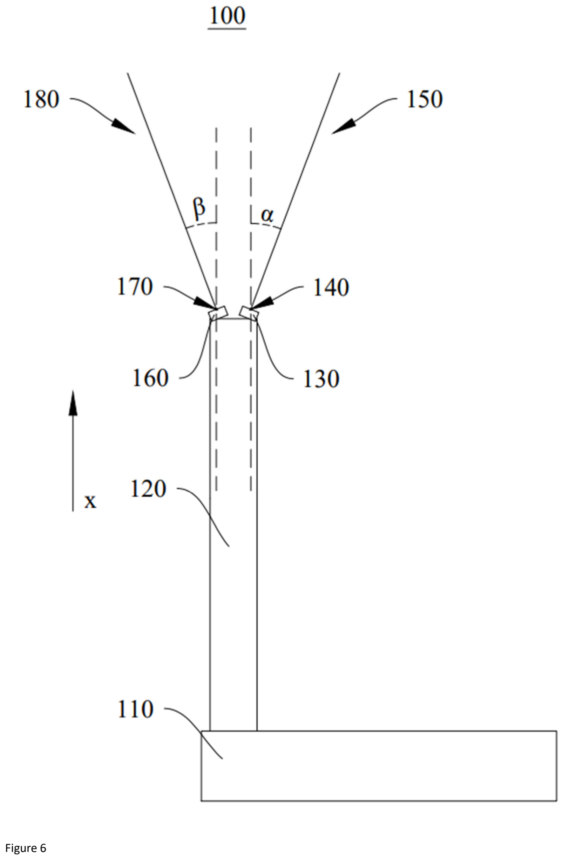

To detect an obstruction 2000 in another direction of the first robotic arm 120 in practical applications, the present disclosure provides an implementation. Referring to FIG. 6, FIG. 6 illustrates a schematic structural side view of the picking and placing structure 100 according to another embodiment of the present disclosure. The picking and placing structure 100 further includes a second sensor 160. The second sensor is disposed on the first robotic arm 120. An angle β is formed between a projection of a straight line where a second sensing beam 180 emitted by a second emitting point 170 of the second sensor 160 lies on the horizontal plane and the projection of the straight line where the movement direction of the first robotic arm 120 lies on the horizontal plane. The angle β is greater than 0° and less than 90°. The first sensor 130 is configured to detect an obstruction close to one side of the first robotic arm 120. The second sensor 160 is configured to detect an obstruction close to another side of the first robotic arm 120.

With the arrangement of the second sensor 160 that emits the second sensing beam 180, the first robotic arm 120 can not only respond to an obstruction 2000 in one direction, but also respond to an obstruction 2000 in another direction, thereby further reducing the probability of collision of the first robotic arm 120. In addition, the picking and placing structure 100 provided in the embodiments of the present disclosure can simultaneously detect material boxes on two sides of the first robotic arm 120 when picking and placing goods from and into a plurality of material boxes placed side by side, thereby avoiding the problem that the picking and placing structure 100 that only can detect an obstruction 2000 on one side collides with an obstruction 2000 on the other side.

According to some embodiments of the present disclosure, optionally, the first sensor 130 and/or the second sensor 160 is a laser ranging sensor, and a spot diameter of the first sensing beam 150 and/or the second sensing beam 180 ranges from 0.5 mm to 5 mm.

Using the laser ranging sensor and setting the spot diameter of the first sensing beam 150 and/or the second sensing beam 180 to 0.5 mm to 5 mm can make sensing of the first sensor 130 and/or the second sensor 160 more accurate, and prevent the sensing beam from excessively diffusing to affect accuracy of the first sensor 130 and/or the second sensor 160.

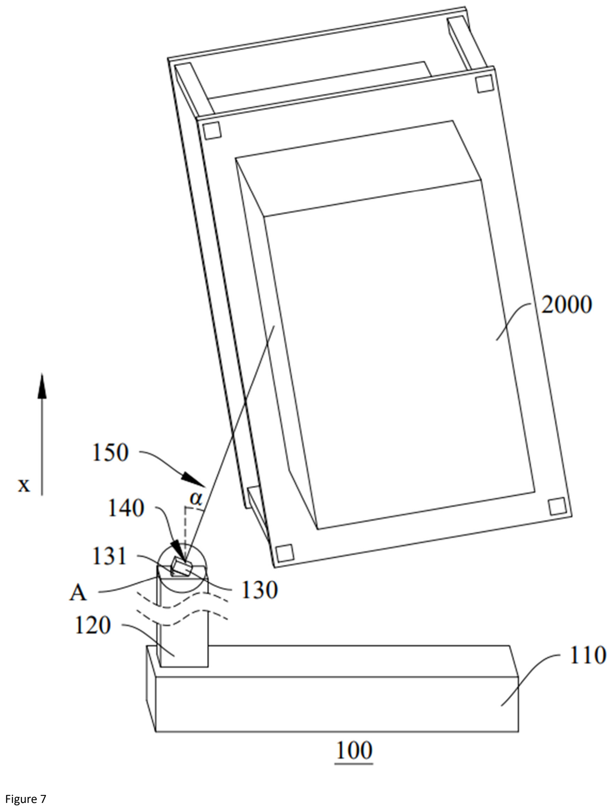

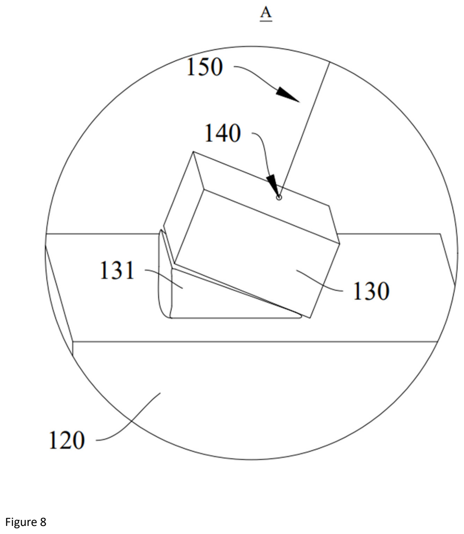

To make it more convenient to adjust the angle of the picking and placing structure 100 provided in the embodiments of the present disclosure, the present disclosure provides an implementation. Referring to FIG. 7, and further referring to FIG. 8, FIG. 7 illustrates a schematic structural view of the picking and placing structure 100 in a working scenario according to another embodiment of the present disclosure, and FIG. 8 is an enlarged view of a part A in FIG. 7. The first sensor 130 includes an angle control device 131. The angle control device 131 is configured to adjust an orientation of the first emitting point 140, to adjust a value of the angle α in a range of 0° to 90°.

Referring to FIG. 8, the angle control device 131 may be one or more pads, which are inserted between the first sensor 130 and the end surface of the first robotic arm 120, so that the first sensor 130 is jacked up by the one or more pads, thereby changing the value of the angle α. According to an actual situation, the angle control device 131 may also be a cam structure driven by a motor. A cam is disposed between the first sensor 130 and the end surface of the first robotic arm 120. The cam is driven by the motor to rotate by different angles, so that the first sensor 130 is jacked up by the cam to different inclination degrees, thereby changing the value of the angle α.

With the arrangement of the angle control device 131, the angle α between the first sensing beam 150 emitted by the first sensor 130 and the plane where the end surface of the first robotic arm 120 lies in the picking and placing structure 100 provided in the embodiments of the present disclosure can be adjusted and controlled in real time and does not need to be set to a fixed angle in advance during assembly the production process. Therefore, technical personal can adjust the angle α at any time according to an actual requirement in practical applications, thereby reducing operation difficulty and improving applicability and ease of use.

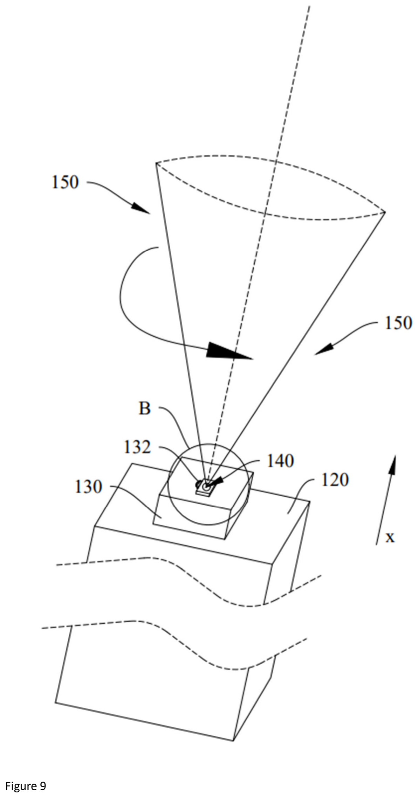

Further, to improve the range of detecting the obstruction 2000 by the picking and placing structure 100 provided in the embodiments of the present disclosure, the present disclosure provides an implementation. Referring to FIG. 9, FIG. 9 illustrates a schematic structural view of the picking and placing structure 100 when the first sensor 130 is in an operating state according to an embodiment of the present disclosure. The first sensor 130 includes a rotation device 132, and the rotation device 132 is configured to drive the first emitting point 140 to rotate about the axis of the first robotic arm 120.

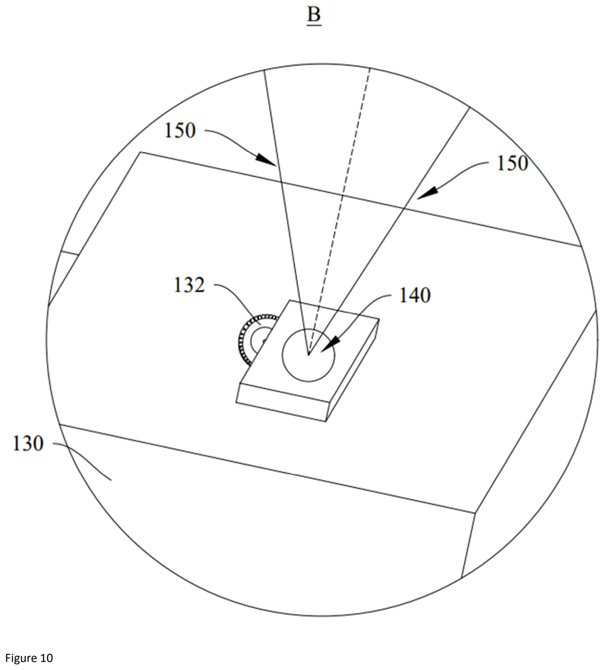

Further, referring to FIG. 10, FIG. 10 is an enlarged view of a part B in FIG. 9. The rotation device 132 may drive the first emitting point 140 in the first sensor 130 to rotate, so as to drive the first emitting point 140 to rotate along the axis of the first robotic arm 120. For example, the rotation device 132 is a gear structure driven by a small motor, and drives, through gear transmission, the first emitting point 140 to rotate along the axis of the first robotic arm 120. Alternatively, the rotation device 132 may drive a body of the first sensor 130 to rotate, so as to cause the first emitting point 140 to rotate. For example, the rotation device 132 is a chassis 1200 that can be driven by a motor to rotate. It may be understood that, different structures may be used as the rotation device 132 provided in the embodiments of the present disclosure, as long as the first emitting point 140 on the first sensor 130 can be driven to rotate about the axis of the first robotic arm 120. This is not specifically limited in the embodiments of the present disclosure.

With the arrangement of the rotation device 132 to drive the first emitting point 140 to rotate about the axis of the first robotic arm 120, the sensing range of the obliquely emitted first sensing beam 150 is expanded to a conical region, thereby reducing the visual blind zone of the first sensor 130 in sensing the obstruction 2000. In this way, the picking and placing structure 100 can detect the obstruction 2000 within a larger range, thereby further reducing the probability that the first robotic arm 120 collides with the obstruction 2000.

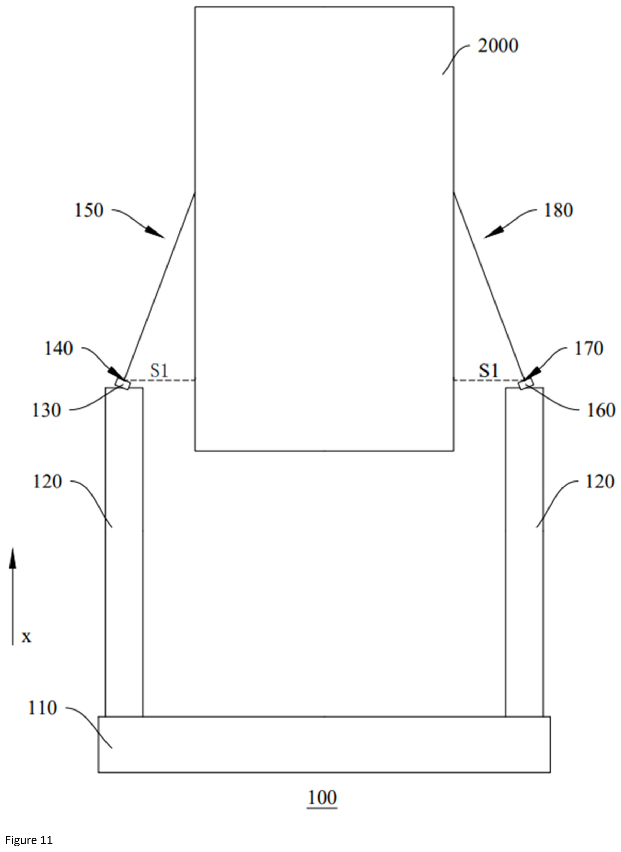

According to some embodiments of the present disclosure, optionally, referring to FIG. 11, FIG. 11 illustrates a schematic structural side view of the picking and placing structure 100 according to still another embodiment of the present disclosure. The picking and placing structure 100 includes at least two first robotic arms 120, where the at least two of the at least two first robotic arms 120 are symmetrically disposed.

In some cases, in the field of logistics warehousing, a material box may be heavy, and a single robotic arm may fail to bear the weight of the material box. By disposing at least two first robotic arms 120 on the main structure 110 and symmetrically disposing at least two of the at least two first robot arms 120, the picking and placing structure 100 provided in the embodiments of the present disclosure can use a plurality of robotic arms to pick or place goods more stably, and can bear heavier goods, thereby solving the problem that the robotic arm is insufficient to bear heavy goods.

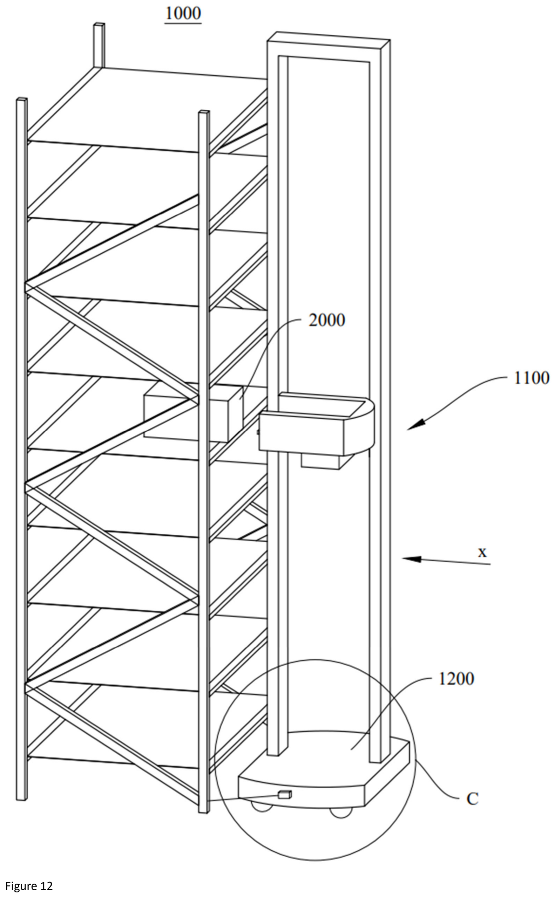

According to another aspect of the embodiments of the present disclosure, a logistics robot 1000 is provided. Referring to FIG. 12, FIG. 12 illustrates a schematic three-dimensional structural view of the logistics robot 1000 according to an embodiment of the present disclosure. The logistics robot 1000 includes the picking and placing structure 100 according to any one of the foregoing embodiments.

When the picking and placing structure 100 provided in the embodiments of the present disclosure is applied to the logistics robot 1000, technical personnel only needs to calculate the first distance threshold b according to the angle α and a preset safe distance S1, and configure the first sensor 130 in the picking and placing structure 100 to send an adjustment signal to the first robotic arm 120 when detecting that a length of the first sensing beam 150 emitted obliquely is less than the first distance threshold b, so that the first robotic arm 120 stops moving upon receiving the adjustment signal. As such, the first robotic arm 120 is prevented from colliding with the obstruction 2000, thereby reducing the probability of a fault caused by collision of the robotic arm when the logistics robot 1000 is picking and placing goods in a logistics warehouse.

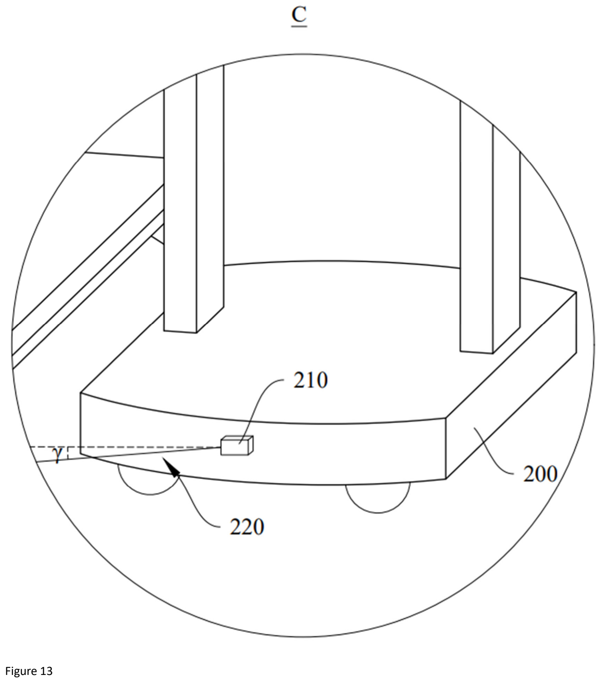

According to some embodiments of the present disclosure, optionally, referring to FIG. 13, FIG. 13 is an enlarged view of a part C in FIG. 12. The logistics robot 1000 further includes a mobile chassis 200. The mobile chassis 200 is connected to the picking and placing structure 100. The mobile chassis 200 is configured to support and drive the picking and placing structure 100 to move. At least one third sensor 210 is disposed on the mobile chassis 200. The at least one third sensor 210 is connected to the mobile chassis 200. The at least one third sensor 210 is configured to emit a third sensing beam 220. An angle γ is formed between a straight line where the third sensing beam 220 lies and a straight line where a movement direction of the mobile chassis 200 lies. The angle γ is greater than 0° and less than 90°.

With the arrangement of the at least one third sensor 210 on the mobile chassis 200 of the logistics robot 1000 and the formation of the angle γ greater than 0° and less than 90° between the straight line where the third sensing beam 220 emitted by the third sensor 210 lies and the straight line where the movement direction of the mobile chassis 200 lies, the mobile chassis 200, when driving the logistics robot 1000 to move, can detect an obstruction 2000 on the movement path, thereby avoiding the problem that an obstruction 1000 cannot be detected when the logistics robot 1000 is driven by the mobile chassis 200 to move and the logistics robot 1000 collies with the obstruction.

According to another aspect of the embodiments of the present disclosure, a warehousing system is provided, including the logistics robot 1000 provided in any one of the foregoing embodiments.

According to the picking and placing structure 100 provided in the embodiments of the present disclosure, the formation of the angle α greater than 0° and less than 90° between the first sensing beam 150 emitted by the first sensor 130 and the plane where the end surface of the first robotic arm 120 lies expands the sensing range of the first sensor 130, and the first sensing beam 150 emitted obliquely can better detect a region where an obstruction is likely to appear and collide with the robotic arm in the field of logistics warehousing. In addition, operation personnel can flexibly set an obstacle avoidance condition for the first robotic arm 120 according to an actual requirement, thereby improving the obstruction detection probability and the applicability of the picking and placing structure 100.

When the picking and placing structure 100 provided in the embodiments of the present disclosure is used in combination with the logistics robot 1000 in the field of logistics warehousing, the probability that the logistics robot 1000 collides with goods can be reduced, the picking and placing operation of the logistics robot 1000 can be performed more stably and efficiently, and the progress of operation is not easily affected due to collision with an obstacle or goods. In addition, the at least one third sensor 210 disposed on the mobile chassis 200 of the logistics robot 1000 enables the logistics robot 1000 to detect an obstacle during movement, to improve the obstacle avoidance performance of the logistics robot 1000 and further reduce the probability of occurrence of an accident.

When the picking and placing structure 100 provided in the embodiments of the present disclosure is applied to a warehousing system in the field of logistics warehousing, the probability of a fault in the warehousing system can be reduced, thereby improving the stability of operation of the warehousing system.

Finally, it should be noted that: the foregoing embodiments are merely used for describing the technical solutions of the present disclosure, but are not intended to limit the present disclosure. Although the present disclosure is described in detail with reference to the foregoing embodiments, it should be appreciated by a person skilled in the art that, modifications may still be made to the technical solutions described in the foregoing embodiments, or equivalent replacements may be made to the part or the entirety of the technical features; and these modifications or replacements will not cause the essence of corresponding technical solutions to depart from the scope of the technical solutions in the embodiments of the present disclosure. In particular, as long as there is no structural conflict, the technical features mentioned in the embodiments may be combined in any manner. The present disclosure is not limited to specific embodiments disclosed herein, but includes all technical solutions falling within the scope of the technical solutions of the present disclosure.

## Claims

1. A picking and placing structure, comprising: a main structure, a first robotic arm, and a first sensor, wherein
the first robotic arm is disposed on the main structure and is linearly movable relative to the main structure, and the first sensor is disposed on the first robotic arm;
the first sensor is configured to detect an obstruction in front of the first robotic arm when the first robotic arm extends and moves; and
an angle α is formed between projections of a straight line where a first sensing beam emitted by a first emitting point of the first sensor lies and a straight line where a movement direction of the first robotic arm lies on a horizontal plane, and the angle α is greater than 0° and less than 90°.

2. The picking and placing structure according to claim 1, wherein the first robotic arm is configured to pick or place a material box;
the first sensor is configured to emit the first sensing beam through the first emitting point when the first robotic arm picks or places the material box, to detect a first distance between the first emitting point and the obstruction; and
the first robotic arm is configured to stop moving when the first sensor detects that the first distance is less than or equal to a first distance threshold.

3. The picking and placing structure according to claim 1, wherein the first sensor is obliquely disposed on the first robotic arm, to form the angle α; and/or the angle α is greater than 5°, and/or the angle α is less than 33°; and/or the straight line where the first sensing beam lies is parallel to the horizontal plane; and/or the first sensor is disposed at an end portion of an extended end of the first robotic arm; and/or the first sensor is disposed at a central position on an end surface of the extended end of the first robotic arm; and/or the first sensor is a laser ranging sensor.

4. The picking and placing structure according to any one of claims 1 to 3, further comprising a second sensor, the second sensor is disposed on the first robotic arm, an angle β is formed between a projection of a straight line where a second sensing beam emitted by a second emitting point of the second sensor lies on the horizontal plane and the projection of the straight line where the movement direction of the first robotic arm lies on the horizontal plane, the angle β is greater than 0° and less than 90°, the first sensor is configured to detect an obstruction close to one side of the first robotic arm, and the second sensor is configured to detect an obstruction close to the other side of the first robotic arm.

5. The picking and placing structure according to claim 4, wherein the first sensor and/or the second sensor is a laser ranging sensor, and a spot diameter of the first sensing beam and/or the second sensing beam ranges from 0.5 mm to 5 mm.

6. The picking and placing structure according to any one of claims 1 to 3, wherein the first sensor includes an angle control device, and the angle control device is configured to adjust an orientation of the first emitting point, to adjust a value of the angle α in a range of 0° to 90°.

7. The picking and placing structure according to any one of claims 1 to 3, comprising at least two first robotic arms, wherein at least two of the at least two first robotic arms are symmetrically disposed.

8. A logistics robot, comprising the picking and placing structure according to any one of claims 1 to 7.

9. The logistics robot according to claim 8, further comprising a mobile chassis, wherein the mobile chassis is connected to the picking and placing structure, and the mobile chassis is configured to support and drive the picking and placing structure to move;
at least one third sensor is disposed on the mobile chassis; and
the at least one third sensor is connected to the mobile chassis, the at least one third sensor is configured to emit a third sensing beam, an angle γ is formed between a straight line where the third sensing beam lies and a straight line where a movement direction of the mobile chassis lies, and the angle γ is greater than 0° and less than 90°.

10. A warehousing system, comprising the logistics robot according to claim 8 or 9.
